# EUROPEAN PATENT APPLICATION

(11) **EP 3 985 669 A1**
(43) Date of publication of application: **20.04.2022**
(21) Application number: 20202313.1
(22) Date of filing: 16.10.2020
(51) Int. Cl.: G11B 27/10, G11B 27/28, G11B 27/34, G06F 16/638, G06F 16/683, G06K 9/00

(54) **METHODS AND SYSTEMS FOR AUTOMATICALLY MATCHING AUDIO CONTENT WITH VISUAL INPUT**

(71) Applicant: Moodagent A/S, 1058 Copenhagen K (DK)
(72) Inventor: Steffensen, Peter Berg, 1058 Copenhagen K (DK); Henderson, Mikael, 1058 Copenhagen K (DK); Rasmus Ilic, Eklund, 1058 Copenhagen K (DK); Mads Borup, Petersen, 1058 Copenhagen K (DK); Mossner, Rickard, 1058 Copenhagen K (DK); Laffitte, Pierre, 1058 Copenhagen K (DK); Gajarsky, Tomas, 1058 Copenhagen K (DK)
(74) Representative: Nordic Patent Service A/S

(57) **Abstract**

A method and system for automatically matching audio content with visual input by obtaining a video (18) or image(s) (3) from a digital camera (39), analyzing the video (18) or image(s) (3) to extract image label(s) (8), mapping the image label(s) (8) to predefined input-output relationships (7) to determine a set of input feature values (9A), and selecting a set of music tracks (10) from a plurality of music tracks (4) stored on a storage device (3) having associated semantic feature values (5A) most closely matching the determined input feature values (9A) to create a playlist (12).

## Description

### TECHNICAL FIELD

The disclosure relates to analyzing and matching visual input with audio content, such as digital images with music tracks. In particular, the embodiments described herein relate to methods and systems for organizing music tracks into a playlist based on automatic image recognition.

### BACKGROUND

Along with the recent development of computer technology in recent years, the digital media industry has also evolved to serve the needs of everyday users, who are now able to use mobile electronic devices (e.g. smartphones, laptops, tablets, etc.) to consume music, video and other forms of media content. At the same time, advances in network technology have increased the speed and reliability with which information can be transmitted over computer networks. It is therefore possible for users to stream media content over computer networks as needed, or on demand, rather than receiving a complete file (on a physical CD, DVD, or downloading the entire file).
Online music streaming services exploit these possibilities by allowing users to access large collections of music tracks using their electronic devices. As a result, online users today face a daunting volume of content and searching this enormous volume of content is challenging. There is therefore an increasing demand from users to be able to quickly find a list of music tracks from these vast catalogues of music available on streaming services that are the most relevant to them based on their actual context in real life (current location, weather, activity, group of friends) and/or in a virtual environment (watching a video, listening to a stream of music).

One way to offer relevant content for users is using automatic media recommendation systems which rank and suggest the most interesting content items based on user preferences, thus saving the users from manually filtering out any uninteresting or unrelated content.
The problem with this approach is that the user preferences are defined mostly based on statistical analysis of the service usage and interactions of the users and their social circles (using e.g. Collaborative Filtering), and therefore the recommendations are based on each item as a catalogue entity (e.g. a file in a database), not taking into account its internal (semantic) properties. Furthermore, when users first start to use a service they will have no information that could be extracted from their profiles regarding their interests, and even later on the gathered information can be incomplete, inaccurate, or in other ways misleading, thus resulting in recommendations that users will find useless or even annoying.

Another approach is to offer a selection of items (e.g. in the form of a playlist) based on similarities between a larger group of media items and a seed item selected by the user. One problem with this approach is that it requires that the user selects a seed item, which represents a similar problem as already described - choosing an item from a vast online catalogue. This is especially problematic when the user does not have a profile registered with a streaming service yet and therefore the system cannot suggest a relevant seed item. Another problem with this approach is that the similarities between music tracks are often determined based on comparing extracted audio signals, which requires a massive storage capacity and a significant amount of computing power to keep up with continuously updated catalogues of hundreds of millions of music tracks. The problem on the other hand with determining similarities using less complex methods, such as comparing associated metadata, is that the metadata is solely based on extrinsic or predefined data (such as the track title, artist name, album name, track number, genre, and release date) and cannot represent the substance of music tracks.

The main issue with the above approaches however is that the end users of these services often have an unspecific wish for hearing a particular type of music that fits well with the end user's current mood (e.g. happy, sad, angry, sensual) or other circumstances (e.g. specific location, workout, commute, relaxing, or watching a movie or a video). Translating such a mood or actual context of a user to create a matching audio experience using the usually limited time and input capabilities of mobile devices is a difficult technical problem.

### SUMMARY

It is an object to provide a method and system for efficiently and automatically matching audio content to visual input, and thereby solving or at least reducing the problems mentioned above.
The foregoing and other objects are achieved by the features of the independent claims. Further implementation forms are apparent from the dependent claims, the description and the figures.

According to a first aspect, there is provided a computer-implemented method for automatically matching audio content to visual input, the method comprising:
- providing a storage device comprising a plurality of music tracks, each music track having associated therewith a set of semantic feature values;
- defining input-output relationships between a set of labels and a corresponding set of semantic feature values for each label;
- obtaining at least one image from a digital camera;
- analyzing the at least one image to extract at least one image label describing the visual content of the at least one image;
- mapping the at least one image label to the input-output relationships to determine a set of input feature values; and
- selecting a set of music tracks from the plurality of music tracks, the set of music tracks having associated semantic feature values most closely matching the input feature values, to create a playlist for the at least one image.

*With this method it becomes possible to quickly and accurately organize a large and continuously growing database of music tracks on a server into a compact, dynamic playlist, using a simple and intuitive user input from a remote client device in the form of a captured or imported image or video, wherein the resulting playlist can accurately and objectively reflect the current mood and*/*or real-life or virtual circumstances of a user.*
*Thus, the method greatly improves searchability and navigability of a large, remoter dynamically changing database, while also improving catalogue utility (by natural inclusion and extension into deeper and wider parts of a catalogue, incl. analysing and matching new releases instantly and surfacing previously undiscovered back-catalogue items).*
*Providing a simple input method that allows quick and responsive creation of playlists greatly improves interactivity and flexibility, while also allowing for improved input complexity through the visual query and the ability to save these input combinations as separate entities for later re-use or to be shared between users to create dynamic playlists that can be applied to the same or different sets of music tracks.*
*The use of compact-sized feature vectors for playlist creation ensures efficient data usage when communicating between a server (of a streaming service provider) and a client device (smartphone with a streaming application), thereby achieving savings on both costs, response time, and network load. The latter may become especially relevant when mobile networks are being used for data communication between a server and a client device.*

*The combination of the above input with pre-defined input-output relationships adds a further layer of accuracy for the resulting playlist, and highly improves calculation efficiency on the server.*

In an embodiment the at least one image for extracting image labels is obtained directly by capturing a photo or video using a digital camera of a mobile device of a user requesting the playlist.
In another possible embodiment the at least one image is obtained indirectly by uploading an already recorder photo or video from a storage device of a mobile device of a user requesting the playlist. In a possible embodiment the at least one image is extracted from a photo or video received from a second user that is different from the user requesting the playlist, e.g. via a 3rd party image or video hosting service, or social media platform (such as Snapchat, TikTok, Instagram, Facebook, etc.).

In an embodiment the number of music tracks in the set of music tracks in the playlist is between 1 and 100, more preferably 1 and 50, most preferably 1 and 25.

In an embodiment the number *n_{f}* of semantic feature values in the set of semantic feature values associated with each music track is 1 ≤ *n_{f}* ≤ 256, more preferably 1 ≤ *n_{f}* ≤ 100, more preferably 1 ≤ *n_{f}* ≤ 34; wherein each of the semantic feature values and input feature values is preferably an integer number, more preferably a positive integer number, most preferably a positive integer number with a value ranging from 1 to 7.

*The inventors arrived at the insight that selecting the number of feature values and their numerical value from within these ranges ensures that the data used for further processing is sufficiently detailed while also compact in data size in order to allow for efficient processing.*

In an embodiment the semantic characteristic represented by a semantic feature value is one of
- a perceived musical characteristic corresponding to the style, genre, sub-genre, rhythm, tempo, vocals, or instrumentation of the respective music track;
- a perceived emotional characteristic corresponding to the mood of the respective music track; or
- an associated characteristic corresponding to metadata, online editorial data, geographical data, popularity, or trending score associated with the respective music track. Providing feature vectors comprising such feature values that numerically represent these musical, emotional, and other associated characteristics enables a complex representation of these music tracks while still having an efficiently small data size. Calculating similarity using these feature values and vectors enables efficient processing without sacrificing the accuracy or relevancy of results.

In a possible implementation form of the first aspect the input-output relationships are defined by providing a semantic matrix defining relationships between a set of labels and a corresponding set of semantic features, wherein the values of the semantic matrix represent a relevance of each semantic feature for a given label.

In a further possible implementation form of the first aspect the input-output relationships are defined by providing a machine learning-based semantic algorithm trained to predict a relevance of a set of semantic features for a given label by calculating semantic feature values.
In an embodiment, the machine learning-based semantic algorithm is trained using existing combinations of labels and feature vectors comprising semantic feature values. In an embodiment the labels for training the semantic algorithm are extracted from music videos, wherein a feature vector is extracted from the respective music track and is mapped to visual labels extracted from images of the video.

In a further possible implementation form of the first aspect the input-output relationships are specific for each user and define relationships between a set of labels and a corresponding unique set of semantic feature values based on personal preferences of a respective user.

In a further possible implementation form of the first aspect mapping the image label(s) to the input-output relationships further comprises obtaining a plurality of additional labels derived from the image label(s) based on semantic similarities to create a label set comprising at least one of the image label(s) and the additional labels; and mapping the label set to the input-output relationships to determine the set of input feature values.

Mapping the extracted image labels or the label set to the input-output relationships may happen using any possible mapping method suitable for the type of input-output relationships used, e.g. linear mapping, mapping by proxy, Euclidian mapping, cosine mapping, linguistic mapping, abstract mapping, and so on.

In an embodiment, the plurality of additional labels are synonyms related to the image label(s), determined using a synonym database.
In another embodiment, the plurality of additional labels are emotional labels derived from the image label(s) by mapping to an emotion database (such as the NRC Emotion Lexicon) defining a corresponding emotional label for each label; and the label set is restricted to the additional labels.
In an embodiment the emotion database defines distances between certain labels and certain emotions, wherein the additional labels are determined by finding, for each image label, the closest distance to an emotional label.
In an embodiment an input label is identified by finding the emotional label with the closest distance to all extracted image labels combined, and the input label is used for mapping to the input-output relationships to determine the set of input feature values.
In an embodiment the emotion database is unique to a specific user and determined based on a personal profile defining relevance of certain emotional labels for a respective user.

In a further possible implementation form of the first aspect the method further comprises grouping the extracted image labels into different label types using grouping rules based on predefined associations (for example, grouping "cars" and "buildings" into the label types "urban" or "city"); assigning a weight to each label type using weighting rules based on emotional relevance of different label types; and applying the assigned weights when creating the label set and/or when mapping the label set as a filtering or ranking rule.

In a further possible implementation form of the first aspect mapping the label set to the input-output relationships further comprises mapping the label set to a user-specific subset of the set of labels to determine at least one input label; and mapping the input label(s) to the input-output relationships to determine the set of input feature values.

In a possible embodiment the user-specific subset comprises a selection of labels from the set of labels, selected according to associations of certain labels with a specific user based on e.g. moods or genres of previously listened music tracks.
In a possible embodiment the user-specific subset comprises labels according to a user-specific ranking based on e.g. moods or genres of previously listened music tracks.
In an embodiment the user-specific subset is determined based on previously determined input feature values associated with a respective user (based on previously obtained images or manual settings on a GUI), and their corresponding labels. In an embodiment the user-specific subset comprises a number of labels between 1 and 100.

In a further possible implementation form of the first aspect the at least one image is analyzed by applying a machine learning-based image recognition algorithm trained to extract labels describing the visual content and properties (such as dominant colors, sharpness, brightness, contrast) of images received as input.
The image recognition algorithm can be any suitable algorithm that uses the principles of machine learning and can receive digital images for analysis and prediction of presence of certain elements or features, such as the Google Vision AI, the Rekognition engine by AWS or the Huawei Cloud Image Recognition.

In an embodiment the extraction of labels comprises visual sentiment analysis of the input image(s) (i.e. emotion and sentiment related to the visuals alone).
In another possible embodiment the extraction of labels comprises an intermittent step of sentiment analysis of labels extracted in a first instance.
In an embodiment the machine learning-based image recognition algorithm is trained specifically to extract labels suitable for describing elements of a scene, such as objects (people, surfboards, clothing, plants, animals) and their parts and activities (running, dancing, sailing, celebrating, shopping), gestures, facial expressions, or postures; or such as lightning or colors of the scene.

In a possible implementation form the machine learning-based image recognition algorithm is trained specifically to extract labels from images related to entities (such as brands, trademarks, landmarks, celebrities) specified in an entity matching database defining logical relationships between a set of entities and a corresponding set of semantic feature values.

In a possible implementation form the entity matching database further comprises metadata information for each entity; wherein the metadata information is extracted together with the corresponding set of semantic feature values for each label related to an entity; and wherein the metadata information is embedded within the playlist created for the at least one image.

In a possible implementation form the machine learning-based image recognition algorithm is configured to extract the image labels with an associated score of confidence, and wherein the method further comprises at least one of filtering the image labels by excluding any image label below a predefined confidence threshold value, or using the score of confidence as input for further steps of the method, such as mapping the image label(s) to the input-output relationships to determine a set of input feature values based on their associated score of confidence.

In possible embodiments the confidence threshold value is defined between 50-100%, more preferably at 80%.

In a further possible implementation form of the first aspect each music track has a linked feature vector comprising the associated set of semantic feature values; wherein mapping the image label(s) to the input-output relationships comprises calculating an input feature vector comprising the set of input feature values; and wherein selecting the set of music tracks from the plurality of music tracks is based on calculated vector distances between the linked feature vectors and the input vector.

In a further possible implementation form of the first aspect selecting the set of music tracks from the plurality of music tracks to create a playlist comprises determining a user pool comprising a limited number of the plurality of music tracks associated with a respective user; and calculating vector distances between feature vectors linked to music tracks in the user pool and the input vector.
By creating a user pool for a respective user it becomes possible to determine a limited/targeted set of music tracks to select from when creating the playlist, even when no user profile exists yet for the respective user.

In an embodiment music tracks are associated with a respective user for determining the user pool based on at least one of
- music tracks ever played by the user,
- music tracks most frequently played by the user and most similar artists based on vector distance of semantic data,
- music tracks most recently played by the user and most similar artists based on vector distance of semantic data, or
- music tracks with specific feature values (e.g. only fast tracks / only tracks in a certain language / only tracks with a tenderness value between 2-4) or ranges of feature values of semantic data (e.g. Country, Language, Period, Instruments, Ensembles, Composers, Beat, Tempo),
- artists associated with the user (e.g. artists selected by the user during an onboarding step, or artists marked as favorites), and most similar artists to the artists, wherein the similarity is calculated based on vector distances between associated semantic feature values of tracks of each artist,
- music tracks associated with friends, relations, people, places, or brands nearby the user, or
- current state of a user, wherein the current state can be determined based on music tracks most recently played by the user, current location of the user (based on obtained GPS data), current mood of the user (based on latest selected input feature values, e.g. via a GUI or spoken commands), or other user activity (e.g. user-device interaction, app usage, etc.).

In a further possible implementation form of the first aspect determining the user pool comprises mapping the image labels to a user pool matrix defining relationships between a set of labels and a corresponding set of music tracks associated with a respective user (e.g. based on play history and/or user profile data). For example, if the extracted image labels include surfboard or surfshorts, the user pool is based on favorite tracks of the user for a surfing mood or surfing occasion.

In a further possible implementation form of the first aspect determining the user pool comprises:
- mapping the image labels to a words used in the artist name, release title, recording title, recording lyrics or review, description or note (such as a tweet in Twitter), directly or using synonymy, of the music tracks, to establish a pool with the suitable correspondence between image labels and words. For example, if the extracted image labels include surf and surfing, the user pool is based on tracks with surf and surfing in the artist name, track title or a review of the recording;

In a further possible implementation form of the first aspect determining the user pool comprises:
- determining a plurality of user pools, each user pool comprising a different selection of the plurality of music tracks based on different selection criteria, such as top music tracks in a certain region, music tracks associated with a respective user, or with a user socially connected to the respective user;
- presenting the plurality of user pools on a GUI for a user; and
- receiving user input regarding selection of a user pool by the user.

In a further possible implementation form of the first aspect determining the user pool comprises:
- extracting metadata from the plurality of music tracks, the metadata comprising at least one of genre, release date, musical category (e.g. based on linked feature values), or user category (e.g. based on interactions between a user and a music track such as plays, likes, dislikes, skips, replays, etc) ;
- presenting the metadata grouped into metadata categories on a GUI for a user (such as genre, musical era, sound, or most liked tracks);
- receiving user input regarding selection of a metadata category by the user; and
- arranging all music tracks associated with the selected metadata category into the user pool.

For example, the GUI can present the user with an option to select between three genres of music relevant to the extracted image label according to the user's taste and context, the result of such a selection being a playlist biased towards the selected genre. Similarly, the GUI can present the user with an option to set the time or release period of the music, for instance in the form of a slider between year 1920 and 2020, the result of such a setting being a playlist with a bias towards the selected time or release period.

In an embodiment the number *n_{q}* of music tracks in each user pool is 1 ≤ *n_{q}* ≤ 10000, more preferably 100 ≤ *n_{q}* ≤ 5000, most preferably *n_{q}* = 1500.

In a further possible implementation form of the first aspect the method comprises:
- obtaining a video from a digital camera, the video comprising a temporal sequence of images;
- selecting at least one representative image from the temporal sequence of images;
- analyzing the at least one representative image to extract at least one image label for each representative image;
- grouping the extracted image labels into a video label set; and
- mapping the video label set to the input-output relationships to determine the set of input feature values.

In an embodiment the at least one representative image is selected by analyzing the temporal sequence of images and selecting images based on difference or similarity to a previous image in the sequence.

In another embodiment the at least one representative image is selected by analyzing the video to detect scene constancy or changes and selecting a representative image from each scene.
In another embodiment the at least one representative image is selected by extracting a number of images from the temporal sequence of images at predefined time intervals, such as extracting an image from each second of the video.

In a further possible implementation form of the first aspect the method further comprises:
- selecting a plurality of representative images from the temporal sequence of images;
- creating a playlist for each of the representative images; and
- combining the playlists into a dynamic playlist that is associated with the video and changes to the respective playlist for each representative image by advancing along the temporal sequence of images in the video.

In a further possible implementation form of the first aspect the method further comprises:
- obtaining an audio signal accompanying the video;
- analyzing the audio signal using a machine learning-based audio recognition algorithm trained to identify and extract different types of audio elements from an audio signal such as noise, music track, environmental sounds, and speech;
- analyzing the extracted audio elements to determine at least one audio label describing the context or content of the respective audio element;
- correlating the audio label(s) with the video label set to create a label set comprising at least one of the extracted image label(s) and the audio label(s); and
- mapping the label set to the input-output relationships to determine the set of input feature values.

In an embodiment analyzing the extracted audio elements comprises excluding any identified noise from the audio elements from the analysis.
In an embodiment the audio label describing the context of the respective audio element is based on environmental sounds e.g. beach, sports arena and city traffic.
In an embodiment the audio label describing the content of the respective audio element is based on speech recognition using machine learning and natural language processing (NLP).

In a further possible implementation form of the first aspect, if the identified audio elements comprise a music track or speech, the method further comprises:
- extracting a set of semantic feature values from the identified music track or speech using a semantic feature extraction algorithm; and
- correlating the input feature values based on the image label(s), and optionally correlated with the audio label(s), with the set of semantic feature values extracted from the identified music track or speech to determine a set of correlated feature values to be used as basis for creating the playlist.

In an embodiment the semantic feature extraction algorithm used for extracting a set of semantic feature values from the identified music track is a machine-learning based algorithm trained with music tracks comprising associated semantic feature values.
In an embodiment the semantic feature extraction algorithm used for extracting a set of semantic feature values from the speech is a machine-learning based algorithm trained for sentiment analysis based on either classifications of recognized words or on the tonality of speech.

In a further possible implementation form of the first aspect the method further comprises:
- obtaining contextual information from a client device, the contextual information comprising at least one of location, time and date, noise level, weather, acceleration, lighting, or biometric data;
- analyzing the contextual information to extract at least one contextual label describing the context of the client device;
- correlating the contextual label(s) with the extracted image label(s), and optionally also audio label(s), to create a label set comprising at least one of the extracted contextual label(s), image label(s), and audio label(s); and
- mapping the label set to the input-output relationships to determine the set of input feature values.

In a further possible implementation form of the first aspect the method further comprises combining the at least one image and the playlist into a multimedia item configured to be shareable on messaging and/or social media platforms; wherein the multimedia item is configured to display, in a GUI, at least a portion of the at least one image as a visual preview, either as a still image or a video; and wherein the multimedia item is further configured to trigger playback through an audio interface of a at least one of the selected set of music tracks in the playlist.

In a further possible implementation form of the first aspect the multimedia item is configured to trigger playback of a representative segment extracted from at least one of the selected set of music tracks in the playlist.

In a further possible implementation form of the first aspect the multimedia item is configured to trigger playback of a sequence of representative segments extracted from the selected set of music tracks in the playlist.

In a further possible implementation form of the first aspect the multimedia item originates from a first user and comprises at least one of the image label, additional labels, input label or input feature values to be re-used as a basis for creating a second playlist for a second user, based on e.g. another set of input-output relationships or another user-specific subset of the set of labels.

In a possible embodiment displaying the visual preview further comprises automatically applying at least one of a visual filter or visual effect (e.g. adding an emoji like rain, sun, hearts, ball, fire, tree, stars) to the at least one image based on at least one of image label (s), audio label(s), contextual label(s), label set, input label or input feature values.

In a further possible embodiment displaying the visual preview further comprises presenting any tags or descriptions supplied by a user to the multimedia item 26 such as a title (e.g. My Favorite Pastime) or an announcement (e.g. It's My Birthday), formatted automatically to fit the at least one image 3, or manually by the user 16.

In a further possible embodiment displaying the visual preview further comprises automatically altering visual properties (e.g. changing the background, or changing the hue, saturation, or color) of the at least one image based on at least one of image label(s), audio label(s), contextual label(s), label set, input label or input feature values.

In possible embodiments combining the at least one image and the playlist into a multimedia item may be executed automatically or manually, e.g. by providing choices for a user on a GUI regarding which tracks to be sampled for a preview.

In a further possible implementation form of the first aspect the method further comprises obtaining feedback (such as shares, re-recording, or community feedback such as like or dislike) regarding the playlist or multimedia item, providing a means of presenting such feedback information individually or collectively in the GUI to indicate and visually reward the user. For example, the GUI can present to the user how many multimedia items he or she has shared, each time and items is view, liked or re-recorded, and how many times each items has been viewed, liked and re-recorded, as well as collective information hereof in the form of leader boards showing, for instance, the item with most views or re-recordings.

In a further possible implementation form of the first aspect the method further comprises obtaining feedback (such as shares, re-recording, or community feedback such as like or dislike) regarding the playlist or multimedia item; interpreting the feedback as positive or negative reinforcement; and using the positive or negative reinforcement as input for training at least one of
- the machine learning-based image recognition algorithm to improve predictions of extracted labels for given input image(s),
- the machine learning-based audio recognition algorithm to improve predictions of extracted audio elements for given input audio signals, or
- the machine learning-based semantic algorithm to improve predictions of relevance of semantic features for given labels.

According to a second aspect, there is provided a system for automatically matching audio content with visual input, the system comprising:
- a machine-readable storage device including a program product and configured to store a plurality of music tracks and a semantic feature values linked to each music track;
- at least one processor configured to execute the program product to perform operations according to the methods of any the possible implementation forms of the first aspect and select a set of music tracks from the plurality of music tracks; and
- a GUI controlled by the at least one processor and configured to detect a user input from a user, and to show to the user, in response to the user input, a playlist comprising the set of music tracks.

*Providing such a computer-based system comprising both a client and a server device as described, in data communication with each other, whereby the music tracks and their associated feature vectors are provided on the server enables an efficient and controlled operation of the whole system in order to increase the speed and accuracy of the playlist creation and to conserve power and increase usage time of the client device, while reducing data communication load and response times between the client device and server.*

In a possible implementation form of the second aspect the system comprises:
- a client device comprising at least one processor and the GUI controlled by the at least one processor;
- a server device in data connection with the client device, the server device comprising a machine-readable storage device including the program product and configured to store the plurality of music tracks and the semantic feature values linked to each music track;
- the server device further comprising at least one processor operable to execute the program product, interact with the client device, and perform operations according to the methods of any the possible implementation forms of the first aspect to create a playlist comprising a set of music tracks from the plurality of music tracks and to transmit the playlist to the client device.

According to a third aspect, there is provided a computer program product, encoded on a computer-readable storage medium, operable to cause a processor to perform operations according to the methods of any one of the possible implementation forms of the first aspect.

*Providing instructions in the form of a computer program product on a computer-readable storage medium enables users to download such instructions to their client device and achieve the advantages listed above without the need for any hardware upgrade of their device.*

These and other aspects will be apparent from and the embodiment(s) described below.

### BRIEF DESCRIPTION OF THE DRAWINGS

In the following detailed portion of the present disclosure, the aspects, embodiments and implementations will be explained in more detail with reference to the example embodiments shown in the drawings, in which:
Fig. 1 shows a flow diagram of a method for automatically matching audio content with visual input and creating a playlist in accordance with the first aspect, using a system in accordance with the second aspect;
Fig. 2 shows a flow diagram of creating a playlist based on a user-specific subset of labels in accordance with a possible implementation form of the first aspect;
Fig. 3 shows a flow diagram of defining input-output relationships using music videos in accordance with a possible implementation form of the first aspect;
Fig. 4 shows a flow diagram of determining user pools in accordance with a possible implementation form of the first aspect;
Fig. 5 shows a flow diagram of creating a playlist based on a video input in accordance with a possible implementation form of the first aspect;
Fig. 6 shows a flow diagram of creating a playlist based on extracted audio signals and images from a video in accordance with a possible implementation form of the first aspect;
Fig. 7 shows a flow diagram of creating a matching playlist for an input video using contextual information from a client device in accordance with a possible implementation form of the first aspect;
Fig. 8 illustrates a combination of a playlist and input image(s) into a multimedia item to be displayed in a GUI of a client device in accordance with a possible implementation form of the first aspect;
Fig. 9 shows a flow diagram of obtaining and using feedback for training machine learning algorithms in accordance with a possible implementation form of the first aspect;
Fig. 10 illustrates the grouping of extracted image labels into weighted label types in accordance with a possible implementation form of the first aspect;
Fig. 11 illustrates a GUI of a client device configured for the display and selection of user pools in accordance with a possible implementation form of the first aspect;
Fig. 12 illustrates a GUI of a client device configured for the display and selection of metadata categories for generating a user pool in accordance with a possible implementation form of the first aspect;
Fig. 13 illustrates a GUI of a client device configured for determining a playlist for a captured video in accordance with a possible implementation form of the first aspect; and
Fig. 14 shows a block diagram of a system for automatically matching audio content with visual input in accordance with a possible implementation form of the second aspect.

### DETAILED DESCRIPTION

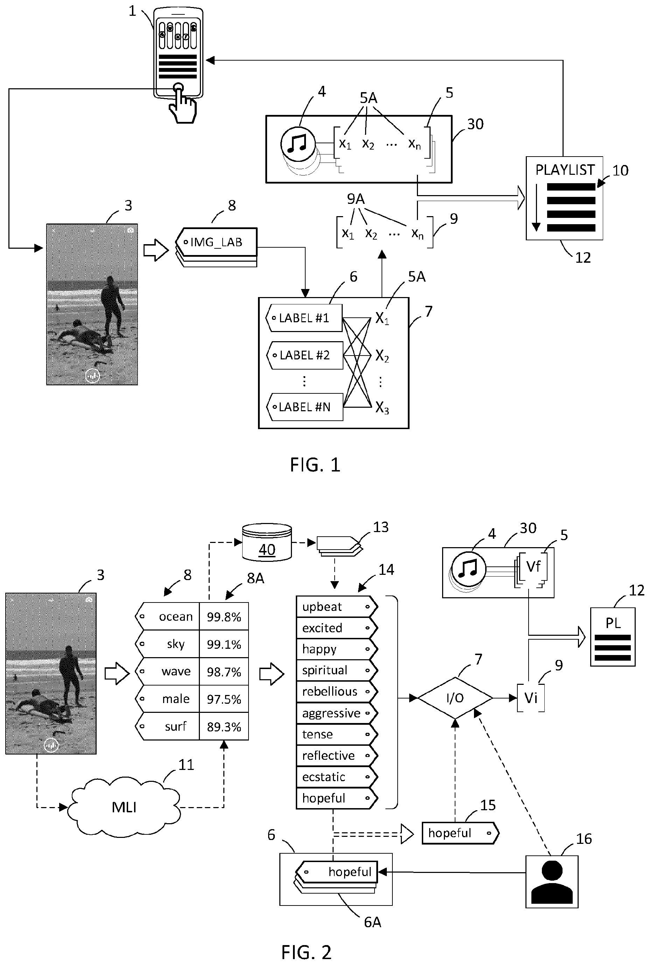

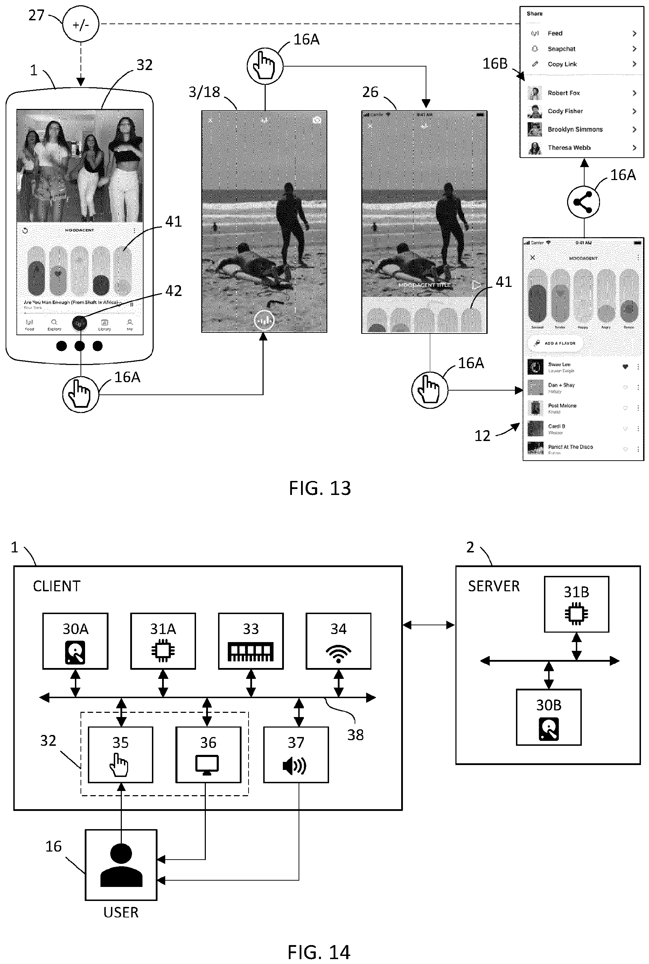

Fig. 1 shows a flow diagram of a method for organizing music tracks into a playlist based on digital image input in accordance with the present disclosure, using a computer-based system such as for example the system shown on Fig. 14.

The system comprises at least a client device 1 configured to obtain at least one image 3. In an embodiment the at least one image 3 is obtained directly by capturing a photo or video 18 using a digital camera 39 of a mobile device of a user requesting the playlist.
In another possible embodiment the at least one image 3 is obtained indirectly by uploading an already recorder photo or video 18 from a storage device 30 of a mobile device 1 of a user 16 requesting the playlist 12. In a possible embodiment the at least one image 3 is extracted from a photo or video 18 received from a second user 16B that is different from the user 16 requesting the playlist 12, e.g. via a 3rd party image or video hosting service, or social media platform (such as Snapchat, TikTok, Instagram, Facebook, etc.).

As illustrated in Fig. 1, a storage device 30 is also provided comprising a plurality of music tracks 4, each music track 4 having linked therewith a feature vector 5 comprising semantic feature values 5A.

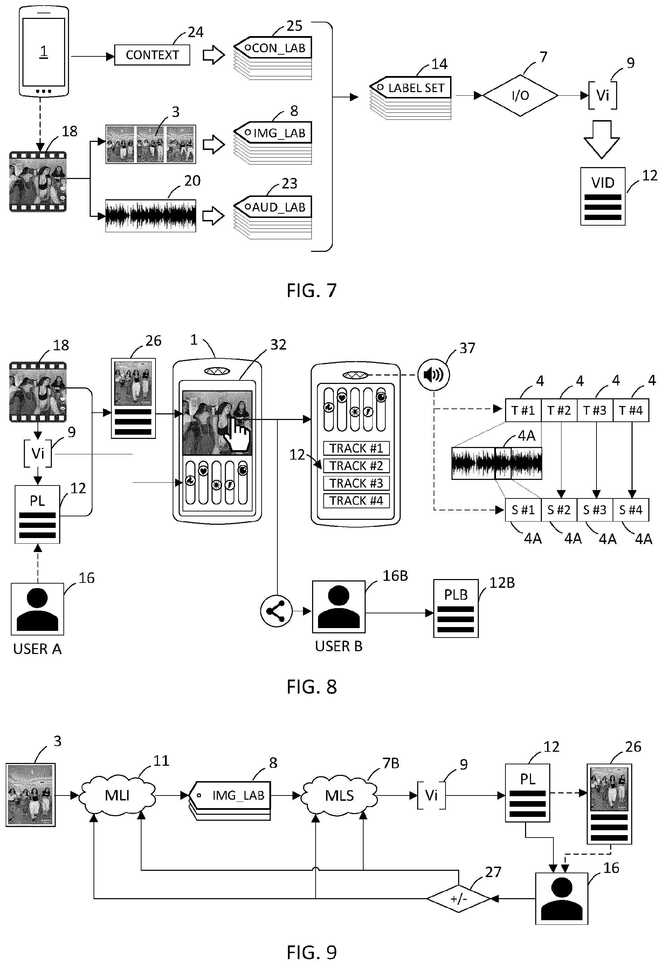

In the present context, 'music track' refers first and foremost to any musical composition (song or instrumental piece) that has been recorded as or converted into digital form to be stored on a digital storage device 30. Thus, each music track 4 can be provided in the form of a digital audio signal stored as an audio file on a storage device 30 of computer-based system such as the one illustrated in Fig. 14. In further possible implementations 'music track' may refer to any type of recorded audio signal (such as recorded speech, full-length audio track of a video, etc.).
In an embodiment, the music track 4 comprises a representative segment 4A, or a combination of representative segments 4A, that have been extracted from the original musical composition, as illustrated in Fig. 8. In a possible embodiment, the duration of a representative segment 4A ranges from 1s to 60s, more preferably from 5s to 30s. In a preferred embodiment, the duration of a representative segment 4A is 15s.

In the present context, a 'vector' is meant to be interpreted in a broad sense, simply defining an entity comprising a plurality of values, such as feature values, in a specific order or arrangement. Accordingly, as illustrated in Fig. 1, each feature vector 5 comprises a set of semantic feature values 5A representing semantic characteristics of the respective music track 4.

In the context of the present disclosure, 'semantic' refers to the broader meaning of the term used in relation to data models in software engineering describing the meaning of instances. A semantic data model in this interpretation is an abstraction that defines how stored symbols (the instance data) relate to the real world, and includes the capability to express information that enables parties to the information exchange to interpret meaning (semantics) from the instances, without the need to know the meta-model itself. Thus, a feature vector 5 comprising semantic feature values 5A refers to efficiently sized digital information (numerical values) suitable for expressing relations to high-level concepts (meaning) in the real world (e.g. musical and emotional characteristics) and providing means to describe and compare associated objects, such as music tracks 4, without the need to know what high-level concept each feature value 5A exactly represents.
In a possible embodiment a feature value 5A may represent a perceived musical characteristic corresponding to the style, genre, sub-genre, rhythm, tempo, vocals, or instrumentation of the respective music track 4; or a perceived emotional characteristic corresponding to the mood of the respective music track 4; or an associated characteristic corresponding to online editorial data, geographical data, popularity, or trending score associated with the respective music track 4. In an embodiment the number of feature values 5A ranges from 1 to 256, more preferably from 1 to 100, more preferably from 1 to 34.
In an embodiment each feature vector 5 consists of 6 feature values 5A corresponding to individual musical qualities of the respective music track 4.

In an embodiment each of these feature values 5A may take a discrete value from 1 to 7, indicating the degree of intensity of a specific feature, whereby the value 7 represents the maximum intensity and the value 1 represents the absence of that feature in the musical segment. The feature values 5A in this exemplary embodiment may correspond to a number of moods (such as 'Angry', 'Joy', or 'Sad'), a number of musical genres (such as 'Jazz', 'Folk', or 'Pop'), and a number of stylistic features (such as 'Beat Type', 'Sound Texture', or 'Prominent Instrument').
In a possible embodiment the feature values 5A of the feature vectors 5 for the music tracks 4 may be determined by extracting the audio signal from each music track 4 and subjecting the whole audio signal, or at least one of its representative segments, to a computer-based automated musical analysis process that may comprise a machine learning engine pre-trained for the extraction of high-level audio features.

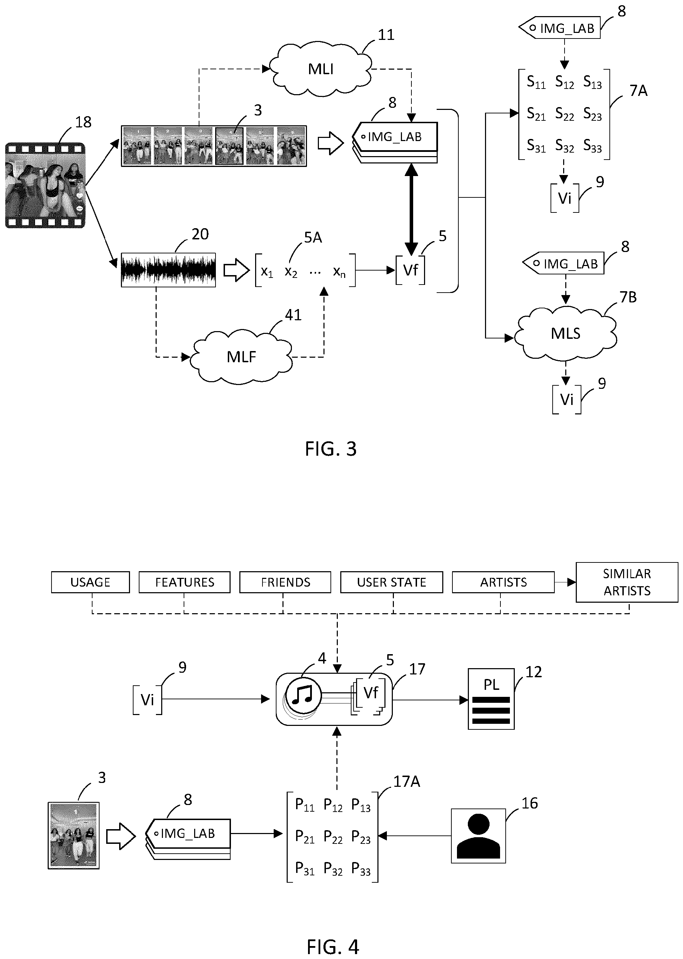

Further defined in the system are input-output relationships 7 between a set of labels 6 and a corresponding set of semantic feature values 5A for each label. These input-output relationships may be defined in different ways, as also illustrated in Fig. 3.
In one embodiment these input-output relationships are defined by providing a semantic matrix 7A defining relationships between a set of labels 6 and a corresponding set of semantic features, wherein the values of the semantic matrix 7A represent a relevance of each semantic feature for a given label.

In another embodiment these input-output relationships are defined by providing a machine learning-based semantic algorithm 7B trained to predict a relevance of a set of semantic features for a given label by calculating semantic feature values 5A. The machine learning-based semantic algorithm 7B may be trained using existing combinations of labels and feature vectors comprising semantic feature values 5A. In an embodiment, as illustrated in Fig. 3, the labels for training the semantic algorithm can be extracted from music videos 18, wherein a feature vector is extracted from the respective music track 4 and is mapped to visual labels extracted from images 3 of the video 18.
The input-output relationships 7 may even be specific for a user 16, as illustrated in Fig. 2, and define relationships between a set of labels 6 and a corresponding unique set of semantic feature values 5A based on personal preferences of a respective user.

As shown in Fig. 1, in an initial step at least one image 3 is obtained. The image(s) 3 can be obtained directly by capturing a photo or video 18 using a digital camera 39 of a mobile device of a user 16 requesting a playlist 12, or indirectly by uploading an already recorder photo or video 18 from a storage device 30 of a mobile device. In a possible embodiment the images 3 are extracted from a photo or video 18 received from a second user 16B that is different from the user requesting a playlist 12, e.g. via a 3rd party image or video hosting service, or social media platform (such as Snapchat, TikTok, Instagram, Facebook, etc.).

The captured image 3 or images 3 are then analyzed to extract at least one image label 8 describing the visual content of the image(s) 3.

The extracted image label(s) 8 are then mapped to the predefined input-output relationships 7 to determine a set of input feature values 9A, which may be concatenated in an input feature vector 9.
The input feature vector 9 is similar in its structure to the feature vectors 5 and comprises input feature values 9A. In some embodiments some or all of these input values 9A correspond to one or more feature values 5A.

In a next step, a set of music tracks 10 is selected from the storage device 30 based on the input feature vector 9, in particular by selecting music tracks 10 having associated semantic feature values 5A most closely matching the input feature values 9A, to create a playlist 12 for the at least one extracted image 3. This matching may be based at least in part on a distance between the respective feature vector 5 of each music track 4 and the input vector 9 in the vector space. The number of music tracks in the set of music tracks in the playlist can be between 1 and 100, more preferably 1 and 50, and most preferably 1 and 25.

In a possible embodiment, whereby a music track 4 may have several feature vectors 5 linked therewith (e.g. each feature vector 5 associated with a different part of the respective music track 4), the selection of the set of music tracks 4 for the playlist 12 may be based on a distance between their respective feature vectors 5 taken separately, or in an arbitrary or temporally ordered combination.
In a further possible embodiment only a part of each feature vector 5 is taken into account for the calculation of vector distances. In an embodiment each or all of the feature values 5A in a feature vector 5 are assigned a weight (e.g. based on their relevance for similarity calculations) and these weighted feature values 5A are taken into account for the calculation of vector distances.
In a possible embodiment the distance between the feature vectors 5 (or parts of feature vectors) is determined by calculating their respective pairwise (Euclidean) distances in the vector space, whereby the shorter pairwise (Euclidean) distance represents a higher degree of similarity between the respective feature vectors 5. In a further possible embodiment, the respective pairwise distances between the feature vectors 5 are calculated with the inclusion of an optional step whereby Dynamic Time Warping is applied between the feature vectors 5. Similarly as above, the shorter pairwise (Euclidean) distance represents a higher degree of similarity between the respective feature vectors 5.

Once the set of music tracks 10 is determined, a playlist 12 is created which, in case it was remotely determined, for example on a server device 2, may be returned to the client device 1 for sharing or displaying in a GUI 32.
The term 'playlist' in this context is meant to be interpreted simply as an ordered list of media content items, such as music tracks 4.
The playlist is based on the set of music tracks 10, taking into account further possible factors such a predefined number of tracks that can be presented in the playlist 12, which may be determined based on e.g. constraints of the display 36 or the GUI 32 of the client device 1, or predefined rules concerning the user experience. In an embodiment the number *Nₚ* of music tracks in the playlist is 1 ≤ *Nₚ* ≤ 100, more preferably 1 ≤ *Nₚ* ≤ 50, most preferably *Nₚ* = 25.

Before determining the set of music tracks 10, one or more rules may be applied in order to remove music tracks 4 comprising blacklisted tags, or to remove music tracks that do not comprise whitelisted tags.
An exemplary list of such blacklisted tags may be: christmas (music with Christmas content), whitelist_christmas (music without Christmas content, but suitable for Christmas), children (music intended for children), whitelist_children (music not specifically targeted for children, but a part of children's repertoire, e.g. songs on Hits for Kids), comedy (music with comedic content or purpose), devotional_hindi, devotional_islam, remix, live, karaoke, cover band, non_music (Speeches, applause, skits, etc.), instrumental (instrumental versions without vocals) and flagged (a tag that indicate uncertainties regarding an applied tag to an artist, album, or track).
Other rules may also be applied in order to add music tracks 4 comprising a whitelisted tag from the storage device 30 to the set of music tracks 10, or in order to remove a recurring music track 4 or a recurring title.
In further possible embodiments, where music tracks 4 comprise language tags, these tags should be taken into consideration for adding/removing tracks to/from the set of music tracks 10 based on the location of the client device 1 (or nationality of the user, if known), further optionally taking into account nationality of the artist of music tracks 4.

Furthermore, after determining the set of music tracks 10, one or more rules may be applied in order to adjust the order of the music tracks 4 based e.g. on their metadata 29, for example by decreasing or increasing spacing between music tracks 4 from the same artist (or similar artists) or having the same (or similar) title, or decreasing or increasing the ranking of music tracks 4 from new or trending artists.

Fig. 2 shows a flow diagram of creating a playlist 12 based on a user-specific subset of labels in accordance with the present disclosure, wherein steps and features that are the same or similar to corresponding steps and features previously described or shown herein are denoted by the same reference numeral as previously used for simplicity.

In an initial step, as already described before, image labels 8 are extracted from the obtained image(s) 3, wherein the at least one image 3 may be analyzed by applying a machine learning-based image recognition algorithm 11 trained to extract labels describing the visual content and properties of images 3 (such as dominant colors, sharpness, brightness, contrast) received as input. The image recognition algorithm can be any suitable algorithm that uses the principles of machine learning and can receive digital images for analysis and prediction of presence of certain elements or features, such as Google Vision, Rekognition by AWS or Huawei Cloud Image Recognition.

In an embodiment the extraction of image labels 8 comprises visual sentiment analysis of the input image(s) 3 (i.e. emotion and sentiment related to the visuals alone).
In another possible embodiment the extraction of image labels 8 comprises an intermittent step of sentiment analysis of labels extracted in a first instance.
The machine learning-based image recognition algorithm 11 can be trained specifically to extract labels suitable for describing elements of a scene (such as objects, people, surfboards) and related activities (running, dancing, sailing, celebrating, shopping), gestures, facial expressions, or postures; or such as lightning or colors of the scene, which are all useful for creating the playlist 12. In a possible implementation form the machine learning-based image recognition algorithm 11 may be trained specifically to extract labels from images related to entities (such as brands, trademarks, landmarks, celebrities) specified in an entity matching database defining logical relationships between a set of entities and a corresponding set of semantic feature values 5A. In a possible implementation form the entity matching database may further comprise metadata 29 for each entity; wherein the metadata 29 can be extracted together with the corresponding set of semantic feature values 5A for each label related to an entity; and the metadata 29 may then be embedded within the playlist 12.

As illustrated, the machine learning-based image recognition algorithm 11 may be configured to extract the image labels 8 with an associated score of confidence 8A.
In this case, the image labels 8 may be filtered from further analysis by excluding any image label 8 below a predefined confidence threshold value. In possible embodiments the confidence threshold value is defined between 50-90%, more preferably between 70-90%, more preferably at 80%.
In another embodiment, the score of confidence 8A may be used as input for further steps, such as mapping the image labels 8 to the input-output relationships 7 to determine a set of input feature values 9A based on their associated score of confidence 8A.

In the illustrated embodiment, a plurality of additional labels 13 are then derived from the image labels 8 that are extracted from the image(s) 3, based on semantic similarities, to create a label set 14 comprising at least some of one the image labels 8 and/or the derived additional labels 13. The additional labels 13 may be synonyms related to the image label(s) 8, determined using a synonym database.
In another embodiment, as illustrated, the additional labels 13 may also be emotional labels derived from by mapping the image labels 8 to an emotion database 40 (such as the NRC Emotion Lexicon) defining a corresponding emotional label for each label. In this case, the label set 14 may be restricted to the additional emotional labels 13.
The emotion database 40 may define distances between certain labels and certain emotions, wherein the additional labels 13 can be determined by finding, for each image label 8, the closest distance to an emotional label.
In an embodiment an input label 15 may be identified by finding the emotional label with the closest distance to all extracted image labels 8 combined, and the input label 15 can then be used for mapping to the input-output relationships 7 to determine the set of input feature values 9A.

The emotion database 40 may be unique to a specific user 16 and determined based on a personal profile defining relevance of certain emotional labels for a respective user.

In the illustrated embodiment, the label set 14 is further mapped to a user-specific subset 6A of the set of labels 6 to determine at least one input label 15. This user-specific subset 6A is specific to a user 16 and may comprise a selection of labels from the set of labels 6, selected according to associations of certain labels with a specific user 16 based on e.g. moods or genres of previously listened music tracks 4. The user-specific subset 6A may also comprise labels according to a user-specific ranking.
The user-specific subset 6A may also be determined based on previously determined input feature values 9A (based on previously obtained images 3 or manual settings on a GUI) associated with a respective user 16 and their corresponding labels. In an embodiment the user-specific subset comprises a number of labels between 1 and 100.

In the remaining steps, as illustrated, the label set 14 or determined input label(s) 15 are mapped to the input-output relationships 7, as already described, to determine the set of input feature values 9A and create the input feature vector 9 for creating the playlist 12.

Fig. 3 shows a flow diagram of defining input-output relationships 7 using videos 18 in accordance with the present disclosure, wherein steps and features that are the same or similar to corresponding steps and features previously described or shown herein are denoted by the same reference numeral as previously used for simplicity.
As the figure shows, the machine learning-based semantic algorithm 7B may be trained or, the semantic matrix 7A may be defined based on combinations of image labels 8 and feature vectors 5 comprising semantic feature values 5A, wherein both the feature vectors 5 and the labels 8 used for training the semantic algorithm 7B or defining the semantic matrix 7A are extracted from the same (music) video, the feature vector 5 being extracted from a respective music track 4 of the video 18 being linked to visual labels 8 extracted from images 3 of the video (as will be described later in detail) using a machine learning-based image recognition algorithm 11 as described before.
Once the semantic algorithm 7B is sufficiently trained (e.g. to a predefined threshold confidence) and/or the semantic matrix 7A is defined, they can be used as described before for determining input feature values 9A for input feature vectors 9 using image labels 8 as input.

Fig. 4 shows a flow diagram of determining user pools 17 in accordance with the present disclosure, wherein steps and features that are the same or similar to corresponding steps and features previously described or shown herein are denoted by the same reference numeral as previously used for simplicity. By creating such a user pool 17 for a respective user 16 it becomes possible to determine a limited/targeted set of music tracks 4 to select from when creating the playlist 12, even when no user profile exists yet for the respective user 16.

As illustrated, a user pool 17 may comprise a limited number of music tracks 4 associated with a respective user, selected from the plurality of music tracks 4 stored on the storage device 30. Once defined, a user pool 17 is used as a limited starting set of music tracks 4 for calculating vector distances between feature vectors 5 linked to music tracks 4 in the user pool 17 and the input feature vector 9.
The music tracks 4 may be associated with a respective user 16 for determining the user pool 17 based on:
- music tracks 4 ever played by the user,
- music tracks 4 most frequently played by the user 16 and most similar artists based on vector distance of semantic data,
- music tracks 4 most recently played by the user 16 and most similar artists based on vector distance of semantic data, or
- music tracks 4 with specific feature values (e.g. only fast tracks / only tracks in a certain language / only tracks with a tenderness value between 2-4) or ranges of feature values of semantic data e.g. Country, Language, Period, Instruments, Ensembles, Composers, Beat, Tempo,
- artists associated with the user 16 e.g. artists selected by the user 16 during an onboarding step, or artists marked as favorites, and most similar artists to the artists, wherein the similarity is calculated based on vector distances between associated semantic feature values 5A of tracks of each artist,
- music tracks 4 associated with friends, relations, people, places, or brands nearby the user, or
- current state of a user, wherein the current state can be determined based on music tracks 4 most recently played by the user, current location of the user 16 (based on obtained GPS data), current mood of the user 16 (based on latest selected input feature values 9A, e.g. via a GUI 32 or spoken commands), or other user activity (e.g. user-device interaction, app usage, etc.).
Determining the user pool 17 may comprise, as also illustrated, mapping the image labels 8 to a user pool matrix 17A defining relationships between a set of labels 6 and a corresponding set of music tracks 10 associated with a respective user 16 (e.g. based on play history and/or user profile data). For example, if the extracted image labels 8 include surfboard or surfshorts, the user pool 17 is based on favorite tracks of the user 16 for a surfing mood or surfing occasion.

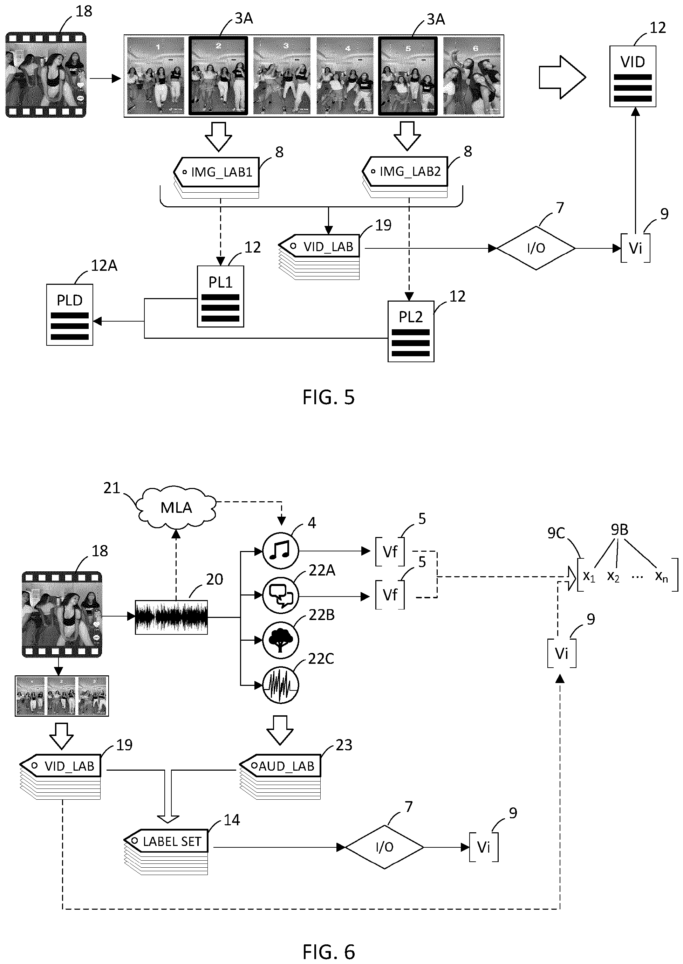

Fig. 5 shows a flow diagram of creating a playlist based on a video 18 input in accordance with the present disclosure, wherein steps and features that are the same or similar to corresponding steps and features previously described or shown herein are denoted by the same reference numeral as previously used for simplicity.

In an initial step, a video 18 is obtained comprising a temporal sequence of images 3.
In a next step, at least one representative image 3A is selected from the temporal sequence of images 3 to be analyzed for extracting at least one image label 8 for each representative image 3A in a manner described before.
The at least one representative image 3A may be selected by analyzing the temporal sequence of images 3 and selecting images 3 based on difference or similarity to a previous image 3 in the sequence.

The at least one representative image 3A may also be selected by analyzing the video 18 to detect scene constancy or changes and selecting a representative image 3A from each scene.
The at least one representative image 3A may also be selected by extracting a number of images 3 from the temporal sequence of images 3 at predefined time intervals, such as 1 image per a one second interval.

In a next step, the extracted image labels 8 may be grouped into a video label set 19 and the video label set 19 may then be mapped to the input-output relationships 7 to determine the set of input feature values 9A and creating a playlist 12 based on the resulting input feature vector 9 in a manner described before.

In an alternative or additional embodiment, as also illustrated in Fig. 5, a plurality of representative images 3A are selected from the temporal sequence of images 3 for creating a playlist 12 for each of the representative images 3A. Once created, the playlists 12 are combined into a dynamic playlist 12A that is associated with the video 18 and applies the respective playlist 12 for each representative image 3A by advancing along the temporal sequence of images 3 in the video 18.

Fig. 6 shows a flow diagram of creating a playlist based on extracted audio signals 20 and images 3 from a video 18 in accordance with the present disclosure, wherein steps and features that are the same or similar to corresponding steps and features previously described or shown herein are denoted by the same reference numeral as previously used for simplicity.

In an initial step, an audio signal 20 is obtained from the video 18. The audio signal 20 is then analyzed using a machine learning-based audio recognition algorithm 21 trained to identify and extract different types of audio elements 22 from an audio signal 20 such as noise 22C, music track 4, environmental sounds 22B, and speech 22A.
In a next step, the extracted audio elements 22 are further analyzed, using existing methods, to determine at least one audio label 23 describing the context or content of the respective audio element 22.
In an embodiment analyzing the extracted audio elements 22 comprises excluding any identified noise 22C from the audio elements 22 from the analysis.
In an embodiment the audio label 23 describing the context of the respective audio element 22 is based on environmental sounds referring to e.g. a beach, sports arena and city traffic.
In an embodiment the audio label 23 describing the content of the respective audio element 22 is based on speech recognition using machine learning and/or natural language processing (NLP).

In a next step, the audio labels 23 are correlated with the already determined video label set 19 in a manner described above, to create a label set 14 comprising at least some of the extracted image labels 8 and/or the audio labels 23, which label set 14 can then be mapped to the input-output relationships 7 to determine the set of input feature values 9A as described before.

In an embodiment, as illustrated in Fig. 6, if the identified audio elements 22 comprise a music track 4 or speech 22A, the method further comprises the steps of extracting a set of semantic feature values 5A from the identified music track 4 and/or the speech 22A using a semantic feature extraction algorithm 41, and correlating the input feature values 9A determined based on the image labels 8 in a manner described above, optionally correlated with the audio labels 23, with the set of semantic feature values 5A extracted from the identified music track 4 and/or the speech 22A to determine a set of correlated feature values 9B to be combined in a correlated feature vector 9C to be used as basis for creating the playlist 12.

In a possible embodiment the semantic feature extraction algorithm used for extracting a set of semantic feature values 5A from the identified music track 4 is a machine-learning based algorithm trained with music tracks 4 comprising associated semantic feature values 5A.
In a possible embodiment the semantic feature extraction algorithm used for extracting a set of semantic feature values 5A from the speech 22A is a machine-learning based algorithm trained for sentiment analysis based on either classifications of recognized words or on the tonality of speech.

Fig. 7 shows a flow diagram of creating a matching playlist 12 for an input video 18 using contextual information 24 from a client device 1 in accordance with the present disclosure, wherein steps and features that are the same or similar to corresponding steps and features previously described or shown herein are denoted by the same reference numeral as previously used for simplicity.
In this embodiment, the method comprises obtaining contextual information 24 from a client device 1, the contextual information 24 comprising at least one of location, time and date, noise level, weather, acceleration, lighting, or biometric data.
After obtaining, the contextual information 24 is analyzed to extract at least one contextual label 25 describing the context of the client device 1.
The contextual labels 25 are then correlated with the image labels 8 and, optionally, also audio labels 23, extracted in a manner described before, to create a label set 14 comprising at least some of the extracted contextual labels 25, image labels 8, and/or audio labels 23.
This label set 14 can then be mapped to the input-output relationships 7 to determine the set of input feature values 9A as described before, to create the playlist 12 matching the input video.

Fig. 8 illustrates a combination of a playlist 12 and input image(s) 3 into a multimedia item 26 to be displayed in a GUI 32 of a client device 1 in accordance with the present disclosure, wherein steps and features that are the same or similar to corresponding steps and features previously described or shown herein are denoted by the same reference numeral as previously used for simplicity.

In this illustrated embodiment, the method further comprises combining the at least one image 3 and the playlist 12 into a multimedia item 26 configured to be shareable on messaging and/or social media platforms; wherein the multimedia item 26 is configured to display, in a GUI 32, at least a portion of the at least one image 3 as a visual preview, either as a still image or a video 18.
In an embodiment, as also illustrated, the multimedia item 26 is further configured to trigger playback through an audio interface 37 of a at least one of the selected set of music tracks 10 in the playlist 12.
In a possible implementation the multimedia item 26 is configured to trigger playback of a representative segment 4A extracted from at least one of the selected set of music tracks 4 in the playlist 12.
In a further possible implementation the multimedia item 26 is configured to trigger playback of a sequence of representative segments 4A extracted from the selected set of music tracks 4 in the playlist 12.

In a further possible embodiment, as also illustrated, the multimedia item 26 originates from a first user 16 and comprises at least one of the image label, additional labels 13, input label 15 or input feature values 9A to be re-used as a basis for creating a second playlist 12B for a second user 16B based on another set of input-output relationships 7 or another user-specific subset 6A of the set of labels 6.

Fig. 9 shows a flow diagram of obtaining and using feedback 27 for training machine learning algorithms in accordance with the present disclosure, wherein steps and features that are the same or similar to corresponding steps and features previously described or shown herein are denoted by the same reference numeral as previously used for simplicity.
In this embodiment, the method further comprises obtaining feedback 27 regarding the playlist 12 or multimedia item 26 and interpreting the feedback 27 as positive or negative reinforcement. After interpretation, the positive or negative reinforcement as input for training machine learning algorithms used in the method, such as:
- the machine learning-based image recognition algorithm 11 to improve predictions of extracted labels for given input images 3,
- the machine learning-based audio recognition algorithm 21 to improve predictions of extracted audio elements 22 for given input audio signals 20, or
- the machine learning-based semantic algorithm 7B to improve predictions of relevance of semantic features for given labels.

In another possible embodiment the method further comprises obtaining feedback 27 (such as shares, re-recording, or community feedback such as like or dislike) regarding the playlist 12 or multimedia item 26, providing a means of presenting information regarding such feedback 27 individually or collectively in the GUI 32 to indicate and visually reward the user 16. For example, the GUI 32 can present to the user 16 how many multimedia items 26 the user 16 has shared, each time and items it is seen, liked or re-recorded, and how many times each items has been viewed, liked and re-recorded, as well as collective information hereof in the form of leader boards showing, for instance, the item with most views or re-recordings.

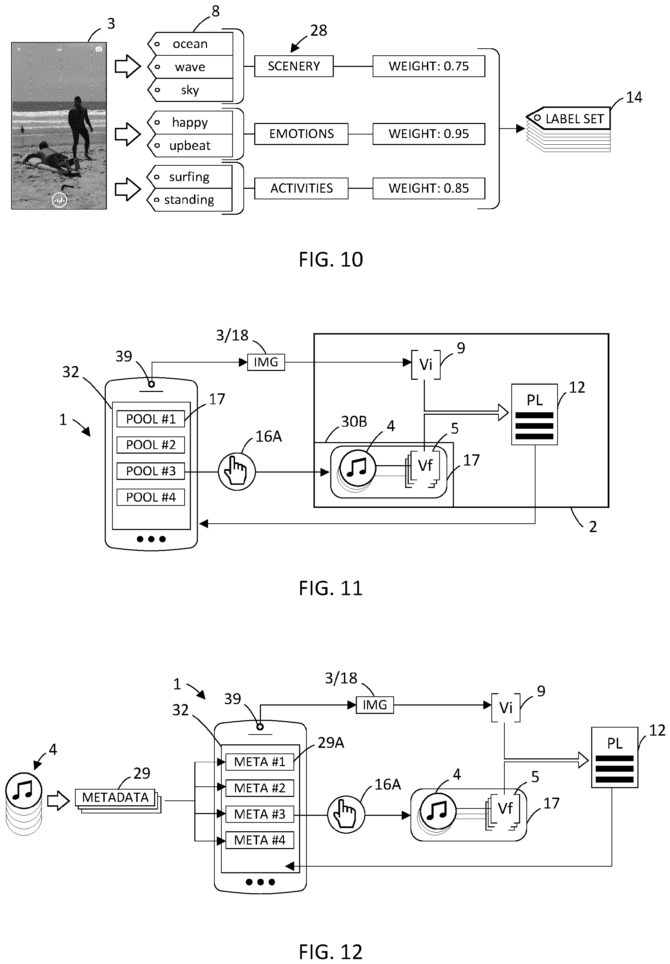

Fig. 10 illustrates the grouping of extracted image labels 8 into weighted label types 28 in accordance with the present disclosure, wherein steps and features that are the same or similar to corresponding steps and features previously described or shown herein are denoted by the same reference numeral as previously used for simplicity.
In this embodiment, the image labels 8 extracted in a manner described before may be grouped into different label types 28 using grouping rules based on predefined associations. For example, image labels 8 describing a scenery (such as "ocean", "wave", or "sky") may be grouped into a "SCENERY" label type 28, whereas image labels 8 describing emotions (such as "happy" or "upbeat") may be grouped into an "EMOTIONS" label type 28, and image labels 8 describing activities (such as "surfing" or "standing") may be grouped into an "ACTIVITIES" label type 28.

After this grouping, a predefined weight may be assigned to each label type using weighting rules based on emotional relevance of different label types 28. These assigned weights can then be applied e.g. when creating the label set 14 and/or when mapping the label set 14 as a filtering or ranking rule.

Fig. 11 illustrates a GUI 32 of a client device 1 configured for the display and selection of user pools 17 in accordance with the present disclosure, wherein steps and features that are the same or similar to corresponding steps and features previously described or shown herein are denoted by the same reference numeral as previously used for simplicity.
In this illustrated embodiment a plurality of user pools 17 are determined for a user 16, each user pool 17 comprising a different selection of the plurality of music tracks 4 based on different selection criteria such as top music tracks 4 in a certain region, music tracks 4 associated with a respective user 16 or with a user 16 socially connected to the respective user. These plurality of user pools 17 are presented on a GUI 32 for a user 16. Once receiving user input 16A regarding selection of a user pool 17, the playlist 12 can be created based on the selected user pool 17 in a manner described before.

Fig. 12 illustrates a GUI 32 of a client device 1 configured for the display and selection of metadata categories 29A for generating a user pool 17 in accordance with the present disclosure, wherein steps and features that are the same or similar to corresponding steps and features previously described or shown herein are denoted by the same reference numeral as previously used for simplicity.
In this illustrated embodiment determining a user pool 17 comprises extracting metadata 29 from the plurality of music tracks 4, the metadata 29 comprising at least one of genre, release date, musical category based on linked feature values, or user category based on interactions between a user 16 and a music track 4 such as plays, likes, dislikes, skips, replays, etc.
The metadata 29 may then be presented grouped into metadata categories 29A on a GUI 32 for a user 16 such as genre, musical era, sound, or most liked tracks. Once receiving user input 16A regarding selection of a metadata category 29A, all music tracks 4 associated with the selected metadata category 29A may be arranged into a user pool 17, and the playlist 12 can be created based on the selected user pool 17 in a manner described before.
For example, the GUI 32 can present the user 16 with an option to select between three genres of music relevant to the extracted image label(s) 8 according to the taste and context of the user 16, the result of such a selection being a playlist 12 biased towards the selected genre. Similarly, the GUI 32 can present the user 16 with an option to set the time or release period of the music tracks 4, for instance in the form of a slider between year 1920 and 2020, the result of such a setting being a playlist 12 with a bias towards the selected time or release period.

Fig. 13 illustrates a GUI 32 of a client device configured for determining a playlist 12 for a captured image 3 or video 18 in accordance with the present disclosure, wherein steps and features that are the same or similar to corresponding steps and features previously described or shown herein are denoted by the same reference numeral as previously used for simplicity.
In an initial step, a starting screen is displayed on the GUI 32 comprising a trigger button 42. Once user input 16A is received regarding touching the trigger button 42, the digital camera 39 of the client device 1 is activated and starts capturing a video 18 or an image 3. In an embodiment, an image 3 is captured by tapping the trigger button 42, and a video 18 is captured by holding the trigger button 42 until a next user input 16A indicates release of the trigger button 42. Once the image 3 or video 18 is captured, a playlist is determined in a manner as described above, which may then be combined into a multimedia item 26 as also described before. Upon receiving further user input 16A the resulting playlist 12 can be initiated for playback through the audio interface 37, or the multimedia item 26 or the playlist 12 can be shared within the same app used for capturing the image 3 or video 18 and creating the matching playlist 12, or on a 3rd party application (such as social media platform or messenger application) either as a standalone playlist 12 of music tracks 4 or a standalone multimedia item 26 showing a visual preview (the captured image 3, video 18, or part of the video 18) and triggering playback of the music tracks 4 or segments 4A of the music tracks 12 in the playlist 12.
In an embodiment the user 16 can also filter, rearrange or select music tracks 4 in the playlist 12 before sharing the multimedia item 26 with other users.

In an embodiment, displaying the visual preview may further comprise automatically or manually applying at least one of a visual filter or visual effect (e.g. adding an emoji like rain, sun, hearts, ball, fire, tree, stars) to the at least one image 3 based on at least one of image labels 8, audio labels 23, contextual labels 25, label set 14, input label 15 or input feature values 9A.
In another possible embodiment, displaying the visual preview may further comprise automatically altering visual properties (e.g. changing the background, or changing the hue, saturation, or color) of the at least one image 3 based on at least one of image labels 8, audio labels 23, contextual labels 25, label set 14, input label 15 or input feature values 9A.

In an embodiment, the input feature values 9A of the input feature vector 9 may be further adjusted by providing, on a GUI 32 of the client device 1, at least one gradual adjustment element 41 movable between two end positions. These gradual adjustment elements 41 each graphically represent a variable associated with at least one input value 9A of the input vector 9. In an embodiment, the position of a gradual adjustment element 41 relative to its end positions represents the value of the variable. Detecting a user interaction with at least one of the gradual adjustment elements 41 results in moving the gradual adjustment element 41 to a new position, and determining the input values 9A of the input vector 9 is based on the new value of the variables affected by the user interaction.
In an embodiment, the gradual adjustment elements 41 comprise at least one slider movable by dragging between two end points along a vertical or horizontal axis. In another embodiment the gradual adjustment elements 41 (further) comprise at least one rotatable knob movable by rotating clockwise or counterclockwise between two extreme positions.
In an embodiment the number of gradual adjustment elements 41 is between 1 and 10, more preferably between 1 and 5, and most preferably the number of gradual adjustment elements 41 is 5.
In a preferred embodiment illustrated in Fig. 8, the GUI 32 comprises five gradual adjustment elements 41 (sliders), each representing a different musical/emotional quality: 'Sensual', 'Tender', 'Happy', 'Angry', and 'Tempo'. These qualities are expressed with the use of representative icons, as illustrated in the figure. Moving the slider associated with the quality 'Tender' for example will affect, through the change in the respective variable, the input values 9A of the input vector 9 associated with tenderness, which in turn will result in a more or less tender playlist 12 comprising music tracks 4 with associated feature vectors 5 whereby the respective semantic feature values 5A are closer to these changed input feature values 9A.

In a possible embodiment a set of input feature values 9A and/or state of gradual adjustment elements 41 can be saved as a 'moodagent' on the client device 1 or on a remote server 2. This 'moodagent' can then be used as a separate entity to be copied and shared between users 16 for dynamically generating playlists 12, in a manner as described above.

In a further possible embodiment, the resulting playlists 12 or moodagent can (also) be saved on a local storage 30A on the client device 1 itself or on the remote server 2 to be re-used (e.g. to serve as a starting pool for further playlist calculations) or shared between users 16.

Fig. 14 shows a schematic view of an illustrative computer-based system in accordance with the present disclosure, wherein the system comprises a client device 1 and a remote server device 2 in data communication with each other via e.g. a computer network.
In some embodiments, the system includes multiple servers 2, multiple client devices 1, or both multiple servers 2 and multiple client devices 1. To prevent overcomplicating the drawing, only one server 2 and one client device 1 are illustrated.
The client device 1 may in an embodiment be a portable media player, a cellular telephone, pocket-sized personal computer, a personal digital assistant (PDA), a smartphone, a desktop computer, a laptop computer, and any other device capable of communicating via wires or wirelessly (with or without the aid of a wireless enabling accessory device).
The server 2 may include any suitable types of servers that are configured to store and provide data to a client device 1 (e.g., file server, database server, web server, or media server). The server 2 can store media and other data (e.g., digital audio signals of musical compositions, or metadata associated with musical compositions), and the server 2 can receive data download requests from the client device 1.
The server 2 can communicate with the client device 1 over a communications link which can include any suitable wired or wireless communications link, or combinations thereof, by which data may be exchanged between server 2 and client 1. For example, the communications link can include a satellite link, a fiber-optic link, a cable link, an Internet link, or any other suitable wired or wireless link. The communications link is in an embodiment configured to enable data transmission using any suitable communications protocol supported by the medium of the communications link. Such communications protocols may include, for example, Wi-Fi (e.g., a 802.11 protocol), Ethernet, Bluetooth (registered trademark), radio frequency systems (e.g., 900 MHz, 2.4 GHz, and 5.6 GHz communication systems), infrared, TCP/IP (e.g., and the protocols used in each of the TCP/IP layers), HTTP, BitTorrent, FTP, RTP, RTSP, SSH, any other communications protocol, or any combination thereof.
In an embodiment, the server 2 comprises a machine-readable storage device 30B including a program product 26 and configured to store a plurality of music tracks 4 and a feature vector 5 linked to each music track 4. The server 2 may further comprise one or more processor(s) 31B operable to execute a program product, and to interact with the client device 1.
The client device 1 may comprise one or more processor(s) 31A and a GUI 32 controlled by the processor(s) 31A and configured to receive a query from a user 16. The GUI 32 may be further configured to show to the user 16, as a reply to the query, a playlist 12 of music tracks 4 determined by executing the program product.

Notwithstanding the above, the client device 1 can also include a storage device 30A, a memory 33, a communications interface 34, an input interface 35, an audio interface 37, a display 36, and an internal bus 38. The client device 1 can include other components not shown in Fig. 14, such as a power supply for providing power to the components of the computer-based system. Also, while only one of each component is illustrated, the system can include more than one of some or all of the components.
Each storage device 30A,30B can store information and instructions to be executed by a processor 31A,31B. A storage device 30 can be any suitable type of storage offering permanent or semi-permanent memory. For example, the storage device 30 can include one or more storage mediums, including for example, a hard drive, Flash, or other EPROM or EEPROM.

A processor 31A or 31B can control the operation and various functions of the client device 1, the server 2 and/or the whole system. As described in detail above, the processor 31B (and/or the processor 31A) can be configured to control the components of the system to execute a method of organizing music tracks into a playlist, in accordance with the present disclosure. The processors 31A,31B can include any components, circuitry, or logic operative to drive the functionality of the system. For example, the processors 31A,31B can include one or more processors acting under the control of an application or program product.
In some embodiments, the application or program product can be stored in a memory. The memory 33 can include cache memory, flash memory, read only memory, random access memory, or any other suitable type of memory. In some embodiments, the memory 33 can be dedicated specifically to storing firmware for a processor 31A,31B. For example, the memory 33 can store firmware for device applications.
An internal bus 38 may provide a data transfer path for transferring data to, from, or between a storage device 30, a processor 31, a memory 33, a communications interface 34, and some or all of the other components of the client device 1 and/or the server 2.
A communications interface 34 enables the client device 1 to communicate with other devices, such as the server 2, either directly or via a computer network. For example, communications interface 34 can include Wi-Fi enabling circuitry that permits wireless communication according to one of the 802.11 standards or a private network. Other wired or wireless protocol standards, such as Bluetooth, can be used in addition or instead.

An input interface 35, audio interface 37, and display 36 provides a user interface for a user 16 to interact with the client device 1.
The input interface 35 may enable a user to provide input and feedback to the client device 1. The input interface 35 can take any of a variety of forms, such as one or more of a button, keypad, keyboard, mouse, dial, click wheel, touch screen, or accelerometer.
An audio interface 37 provides an interface by which the client device 1 can provide music and other audio elements to a user 16. The audio interface 37 can include any type of speaker, such as computer speakers or headphones.
A display 36 can present visual media and can be configured to show a GUI 32 to the user 16. A display 36 can include, for example, a liquid crystal display, a touchscreen display, or any other type of display.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems.

The reference signs used in the claims shall not be construed as limiting the scope.

## Claims

1. A computer-implemented method for automatically matching audio content with visual input, the method comprising:
providing a storage device comprising a plurality of music tracks (4), each music track (4) having associated therewith a set of semantic feature values (5A);
defining input-output relationships (7) between a set of labels (6) and a corresponding set of semantic feature values (5A) for each label;
obtaining at least one image (3) from a digital camera (39);
analyzing said at least one image (3) to extract at least one image label (8) describing the visual content of said at least one image (3),
mapping said at least one image label (8) to said input-output relationships (7) to determine a set of input feature values (9A); and
selecting a set of music tracks (10) from said plurality of music tracks (4), said set of music tracks (10) having associated semantic feature values (5A) most closely matching said input feature values (9A), to create a playlist (12) for said at least one image (3).

2. The method according to claim 1, wherein said input-output relationships (7) are defined by providing a semantic matrix (7A) defining relationships between a set of labels (6) and a corresponding set of semantic features, wherein the values of said semantic matrix (7A) represent a relevance of each semantic feature for a given label.

3. A method according to claim 1, wherein said input-output relationships (7) are defined by providing a machine learning-based semantic algorithm (7B) trained to predict a relevance of a set of semantic features for a given label by calculating semantic feature values (5A).

4. A method according to any one of claims 1 to 3, wherein mapping said image label(s) (8) to said input-output relationships (7) further comprises
obtaining a plurality of additional labels (13) derived from said image label(s) (8) based on semantic similarities to create a label set (14) comprising at least one of said image label(s) (8) and said additional labels (13); and mapping said label set (14) to said input-output relationships (7) to determine said set of input feature values (9A).

5. A method according to claim 4, wherein mapping said label set (14) to said input-output relationships (7) further comprises
mapping said label set (14) to a user-specific subset (6A) of said set of labels (6) to determine at least one input label (15); and
mapping said at least one input label (15) to said input-output relationships (7) to determine said set of input feature values (9A).

6. A method according to any one of claims 1 to 5, wherein said at least one image (3) is analyzed by applying a machine learning-based image recognition algorithm (11) trained to extract labels describing the visual content and properties of images (3) received as input.

7. A method according to claim 6, wherein said machine learning-based image recognition algorithm (11) is configured to extract said image labels (8) with an associated score of confidence (8A), and wherein the method further comprises at least one of
filtering said image labels (8) by excluding any image label (8) below a predefined confidence threshold value,
or using said score of confidence (8A) as input for further steps of said method, such as mapping said image label(s) (8) to said input-output relationships (7) to determine a set of input feature values (9A) based on their associated score of confidence (8A).

8. A method according to any one of claims 1 to 7, wherein each music track (4) has a linked feature vector (5) comprising said associated set of semantic feature values (5A) ;
wherein mapping said image label(s) (8) to said input-output relationships (7) comprises calculating an input feature vector (9) comprising said set of input feature values (9A); and
wherein selecting said set of music tracks (10) from said plurality of music tracks (4) is based on calculated vector distances between said linked feature vectors (5) and said input feature vector (9).

9. A method according to any one of claims 1 to 8, wherein selecting said set of music tracks (10) from said plurality of music tracks (4) to create a playlist (12) comprises:
determining a user pool (17) comprising a limited number of said plurality of music tracks (4) associated with a respective user (16); and
calculating vector distances between feature vectors (5) linked to music tracks (4) in said user pool (17) and said input feature vector (9).

10. A method according to claim 9, wherein determining said user pool (17) comprises
mapping said image labels (8) to a user pool matrix (17A) defining relationships between a set of labels (6) and a corresponding set of music tracks (10) associated with a respective user (16) (based on play history and/or user profile data).

11. A method according to any one of claims 1 to 10, wherein the method comprises
obtaining a video (18) from a digital camera (39), the video (18) comprising a temporal sequence of images (3); selecting at least one representative image (3A) from said temporal sequence of images (3);
analyzing said at least one representative image (3A) to extract at least one image label (8) for each representative image;
grouping said extracted image labels (8) into a video label set (19); and
mapping said video label set (19) to said input-output relationships (7) to determine said set of input feature values (9A).

12. A method according to claim 11, wherein the method further comprises:
selecting a plurality of representative images (3A) from said temporal sequence of images (3);
creating a playlist (12) for each of said representative images (3A); and
combining said playlists (12) into a dynamic playlist (12A) that is associated with said video (18) and applies the respective playlist (12) for each representative image (3A) by advancing along said temporal sequence of images (3) in said video (18).

13. A method according to any one of claims 11 or 12, wherein the method further comprises
obtaining an audio signal (20) accompanying said video (18); analyzing said audio signal (20) using a machine learning-based audio recognition algorithm (21) trained to identify and extract different types of audio elements (22) from an audio signal (20) such as noise (22C), music track (4), environmental sounds (22B), and speech (22A);
analyzing the extracted audio elements (22) to determine at least one audio label (23) describing the context or content of the respective audio element (22); and
correlating said audio label(s) (23) with said video label set (19) to create a label set (14) comprising at least one of said extracted image label(s) (8) and said audio label(s) (23); and
mapping said label set (14) to said input-output relationships (7) to determine said set of input feature values (9A).

14. A method according to claim 13, wherein if the identified audio elements (22) comprise a music track (4) or speech (22A), the method further comprises:
extracting a set of semantic feature values (5A) from said identified music track (4) or speech (22A) using a semantic feature extraction algorithm;
correlating said input feature values (9A) (based on the image label(s) (8), optionally correlated with the audio label(s) (23)) with said set of semantic feature values (5A) extracted from said identified music track (4) or speech (22A) to determine a set of correlated feature values (9B) to be used as basis for creating said playlist (12).

15. A method according to any one of claims 1 to 14, wherein the method further comprises
obtaining contextual information (24) from a client device (1), said contextual information (24) comprising at least one of location, time and date, noise level, weather, acceleration, lighting, or biometric data; and
analyzing said contextual information (24) to extract at least one contextual label (25) describing the context of the client device (1);
correlating said contextual label(s) (25) with said extracted image label(s) (8) (and optionally also audio label(s) (23)) to create a label set (14) comprising at least one of said extracted contextual label(s) (25), image label(s) (8), and audio label(s) (23); and
mapping said label set (14) to said input-output relationships (7) to determine said set of input feature values (9A).

16. A method according to any one of claims 1 to 15, wherein the method further comprises combining said at least one image (3) and said playlist (12) into a multimedia item (26) configured to be shareable on messaging and/or social media platforms; wherein said multimedia item (26) is configured to display, in a GUI (32), at least a portion of said at least one image (3) as a visual preview, either as a still image or a video (18); and
wherein said multimedia item (26) is further configured to trigger playback through an audio interface (37) of a at least one of said selected set of music tracks (10) in said playlist (12).

17. A method according to any one of claims 1 to 16, wherein the method further comprises:
obtaining feedback (27) regarding said playlist (12) or multimedia item (26);
interpreting said feedback (27) as positive or negative reinforcement; and
using said positive or negative reinforcement as input for training at least one of
- said machine learning-based image recognition algorithm (11) to improve predictions of extracted labels for given input images (3),
- said machine learning-based audio recognition algorithm (21) to improve predictions of extracted audio elements (22) for given input audio signals (20), or
- said machine learning-based semantic algorithm (7B) to improve predictions of relevance of semantic features for given labels.

18. A system for automatically matching audio content with visual input, the system comprising:
a machine-readable storage device (30) including a program product and configured to store a plurality of music tracks (4) and a semantic feature values (5A) linked to each music track (4);
at least one processor (31) configured to execute said program product to perform operations according to the methods of any one of the claims 1 to 17 and select set of music tracks (4) from said plurality of music tracks (4);
a GUI (32) controlled by said at least one processor (31) and configured to detect a user input (16A) from a user (16), and to show to said user (16), in response to said user input (16A), a playlist (12) comprising said set of music tracks (4) .

19. A system according to claim 18, wherein the system comprises:
a client device (1) comprising at least one processor (31A) and said GUI (32) controlled by said at least one processor (31A);
a server device (2) in data connection with said client device (1), said server device (2) comprising a machine-readable storage device (30B) including said program product and configured to store said plurality of music tracks (4) and said semantic feature values (5A) linked to each music track (4) ;
said server device (2) further comprising at least one processor (31B) operable to execute the program product, interact with the client device (1), and perform operations according to the methods of any one of the claims 1 to 17 to create a playlist (12) comprising a set of music tracks (4) from said plurality of music tracks (4) and to transmit said playlist (12) to said client device (1).

20. A computer program product encoded on a computer-readable storage medium (30), operable to cause a processor (31) to perform operations according to the methods of any one of claims 1 to 17.
